# EUROPÄISCHE PATENTSCHRIFT

(11) **EP 0 942 792 B1**
(45) Veröffentlichungstag und Bekanntmachung des Hinweises auf die Patenterteilung: **23.05.2001**
(21) Anmeldenummer: 97954666.0
(22) Anmeldetag: 27.11.1997
(51) Int. Cl.: B21C 29/00

(54) **VORRICHTUNG ZUR ABKÜHLUNG VON STRANGPRESSPROFILEN**
DEVICE FOR COOLING EXTRUDED PROFILES
DISPOSITIF POUR LE REFROIDISSEMENT DE PROFILES FILES

(30) Priorität: 28.11.1996 DE 19649073
(43) Veröffentlichungstag der Anmeldung: 22.09.1999
(73) Patentinhaber: Ingenieurgemeinschaft WSP Prof. Dr.-Ing. C.Kramer Prof. H.J. Gerhardt, M.Sc., 52074 Aachen (DE)
(72) Erfinder: KRAMER, Carl, D-52076 Aachen (DE); BECKER, Markus, D-52074 Aachen (DE)
(74) Vertreter: Schwabe - Sandmair - Marx
(86) Internationale Anmeldenummer: EP9706605
(87) Internationale Veröffentlichungsnummer: WO9823397

(56) Entgegenhaltungen:
- EP-A- 0 541 630
- EP-A- 0 578 607
- DE-A- 1 583 418
- DE-A- 19 500 019
- DE-U- 8 810 085
- US-A- 4 611 789

## Beschreibung

Die Erfindung betrifft eine Vorrichtung zur Abkühlung von Strangpreßprofilen gemäß dem Oberbegrif des Patentanspruchs 1.

Strangpreßprofile müssen nach Verlassen der Preßmatrize abgekühlt werden. Bei Profilen aus Leichtmetallegierungen ist dies aus materialtechnischen Gründen erforderlich, um beim fertig abgekühlten Strangpreßprofil die gewünschten Festigkeitswerte und metallurgischen Eigenschaften zu erreichen. Bei AIMgSi-Legierungen sind die erforderlichen Abkühlgeschwindigkeiten bei größeren Wandstärken nur mit intensiver Wasserbeaufschlagung der Profiloberfläche erreichbar. Bei geringeren Wandstärken ist jedoch bei Wasserabkühlung die Abschreckwirkung so stark, daß beim fertig abgekühlten Profil ein Verzug auftritt, der, wenn überhaupt, nur durch aufwendige Richtmaßnahmen und starke Dehnung des Profils beim Strecken wieder behoben werden kann. Das starke Dehnen beim Strecken ist mit einer nachteiligen Veränderung der metallurgischen Eigenschaften verbunden.

Aus der EP 0 541 630 ist eine Vorrichtung zur Abkühlung von Strangpreßprofilen bekannt, bei der lediglich oberhalb und unterhalb des Profils Luftschlitzdüsen angeordnet sind. Diese Vorrichtung hat den Nachteil, daß dann, wenn die Strangpreßprofile mit größerer Bauhöhe extrudiert werden, die Seitenflächen nicht hinreichend stark beaufschlagt werden und folglich bei derartigen Profilen die Abkühlung über dem Umfang nicht gleichmäßig erfolgt. Nach der Lehre des vorgenannten Patents kann der Wärmeübergang über der Breite des Profils mit im Düsenkörper befindlichen Verstellorganen verändert werden. Dies ist insofern nachteilig, daß diese Verstellorgane in einem relativ großen Strömungsquerschnitt, nämlich dem Zuströmquerschnitt zu den Düsenrippen, angeordnet sind und folglich der freie Durchströmungsquerschnitt auf einen vergleichsweise sehr geringen Querschnitt reduziert werden muß, um überhaupt nennenswerte Veränderungen im Wärmeübergang zu erzielen.

Außerdem ist die Verstelleinrichtung nach der Lehre des vorgenannten Patents relativ aufwendig, da sie sich über die gesamte Fläche des Düsenfeldes erstrecken muß. Ebenfalls nach der Lehre dieses Patents sind in den Luftdüsen Wasserdüsen angeordnet. Diese Wasserdüsen können jedoch nur sinnvoll betrieben werden, wenn zugleich die Luftbeblasung aktiviert ist. Dies hat den großen Nachteil, daß ein hoher Luftvolumenstrom mit Wasser beladen wird und folglich erhebliche Aufwendungen notwendig sind, um die in dem Luftstrom enthaltenen Wassertröpfchen wieder aus demselben abzuscheiden.

Ein weiterer Nachteil ist, daß die Wasserdüsen nur mit relativ kleinen Wasserbeaufschlagungsdichten betrieben werden können, da ansonsten die Luftströmung nicht mehr die erforderliche Vergleichmäßigung der Wasserbeaufschlagung bewirken kann. Zum Abkühlen von Strangpreßprofilen größerer Wandstärken sind aber Wasserbeaufschlagungsdichten von 500 1/(m²min) bis 1000 l/(m²/min) erforderlich. Dies sind Werte, die mit der bekannten Vorrichtung bei weitem nicht erreicht werden können. Ein sehr entscheidender weiterer Nachteil ist noch, daß die Wasserdüsen nach der Lehre dieses Patents parallel zu den Schlitzdüsen angeordnet sind. Es kann also immer nur eine quer zur Strangpreßrichtung verlaufende Düsenreihe als Ganzes abgeschaltet oder im Druck geändert werden. Zu der erforderlichen Anpassung der Kühlwirkung an die Massen- und Wandstärkenverteilung im Profil ist eine solche Verstellung nicht geeignet.

Aus der DE-U-88 10 085 ist eine Sprühwasser-Abschreckvorrichtung für Strangpreßprofile bekannt, wie sie im Oberbegriff des Patentanspruchs 1 beschrieben wird. Die Abkühlung des Strangpreßprofils erfolgt hier lediglich durch ein Besprühen mit Wasser in einem Sprühtunnel, während über schwenkbar angeordnete Luftdüsen am Eintritt und am Austritt der Vorrichtung Luftvorhänge gebildet werden, welche ein Besprühen der Strangpreßprofile außerhalb des Sprühtunnels verhindern (siehe Seite 7, 2. Abschnitt).

Bei dieser Vorrichtung stellt es sich als nachteilig heraus, daß eine Kühlung der Strangpreßprofile lediglich durch Luft nicht möglich ist, so daß auch hier bei geringen Wandstärken durch Wasserabkühlung eine zu starke Abschreckwirkung und damit ein Profilverzug eintreten kann. Außerdem ist die zur Verfügungstellung eines Sprühtunnels aufwendig.

Die EP-A- 0 578 607 beschreibt eine Abkühlung von Profilen mit Wasser- und Luftstrahlen, wobei die Wasserstrahlen aus der Düse 28 austreten, während die Luftstrahlen durch Luftspalte 39, 41 auf die Düsenaustrittsöffnungen 38 gerichtet werden. Die Luftdüsenöffnungen bilden mit den Wasserdüsen eine Funktionseinheit, was bedeutet, daß die Wasser- düse nur funktionsgerecht arbeitet, wenn auch die Luftdüsen betrieben werden.

Mit einer Vorrichtung gemäß der EP-A- 0 578 607 kann deshalb nicht der gesamte Kühlbereich von mäßiger Luftkühlung bis zu intensiver Luftkühlung und dann von mäßiger Wasserkühlung bis zu honchintensiver Wasserkühlung abgedeckt werden.

Es ist die Aufgabe der vorliegenden Erfindung, diese vorgenannten Nachteile zu vermeiden. Diese Aufgabe wird durch die kennzeichnenden Merkmale des Patentanspruchs 1 gelöst. Die Unteransprüche definieren bevorzugte Ausführungsformen der Erfindung.

Insbesondere wird mit der vorliegenden Erfindung eine Vorrichtung zur Abkühlung von Strangpreßprofilen vorgeschlagen, die besonders für Strangpreßprofile aus Leichtmetallegierungen geeignet ist und die sowohl für geringe als auch große Profilwandstärken die erforderlichen hohen Abkühlgeschwindigkeiten ermöglicht, indem Profile geringerer Wandstärke nur mit Luft und Profile mit größerer Wandstärke nur mit Wasser gekühlt werden, wobei aber trotzdem ein Verbiegen oder Verziehen der Profile beim Abkühlen weitestgehend ausgeschlossen wird, da sich sowohl die Luftkühlung als auch die Wasserkühlung der Wandstärken- und Massenverteilung des Profils anpassen lassen.

Ein großer Vorteil im Vergleich zu anderen Vorrichtungen zum Kühlen von Strangpreßprofilen ist noch, daß die neue Vorrichtung den gesamten Bereich des Wärmeübergangs von der Luftkühlung bis zur schroffen Wasserkühlung überdeckt. Diesem Bereich entspricht für Strangpreßprofile aus Leichtmetallegierungen für den metallurgisch wichtigen Temperaturbereich von ca. 500 °C bis ca. 250 °C ein Umfang des mittleren Wärmeübergangskoeffizienten von ca. 100 W/(m²K) bis ca. 6000 W/(m²K), also ein Bereich von etwa 1:60. Dabei wird im Bereich von 100 W/(m²K) bis ca. 300 W/(m²K) mit Luft und darüber mit Wasser gekühlt. Da in dem vorgenannten Temperaturbereich bei Leichtmetallegierungen die Wasserkühlung oberhalb der sogenannten Leidenfrost-Temperatur stattfindet, ist der Wärmeübergang im wesentlichen von der Wasserbeaufschlagungsdichte abhängig. Die Vorrichtung nach der Erfindung zeichnet sich also dadurch aus, daß die Wasserbeaufschlagungsdichte in dem erforderlichen großen Umfang verändert werden kann und dies ohne die Gleichmäßigkeit der Wasserbeaufschlagung nachteilig zu verändern.

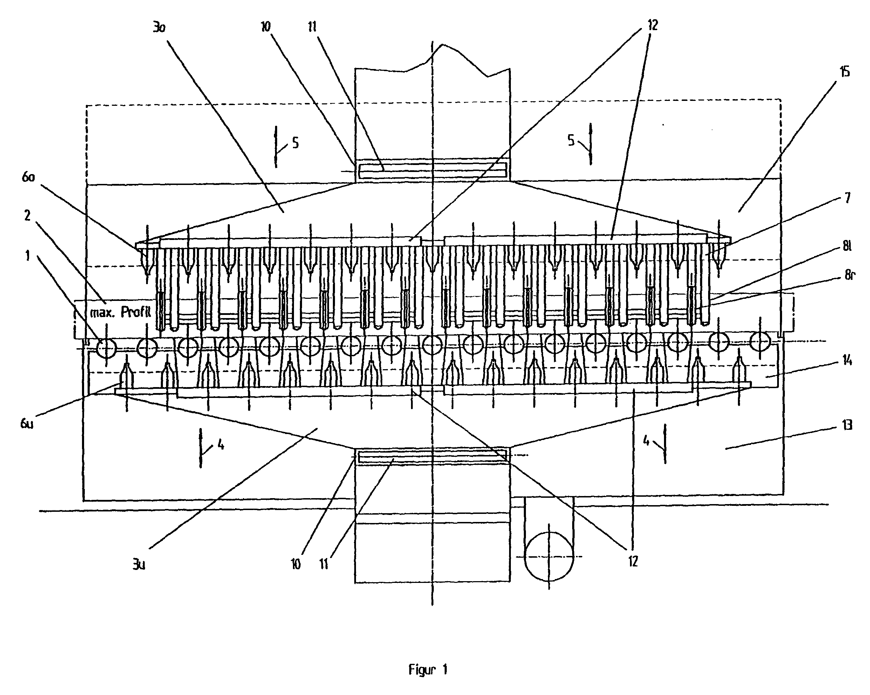

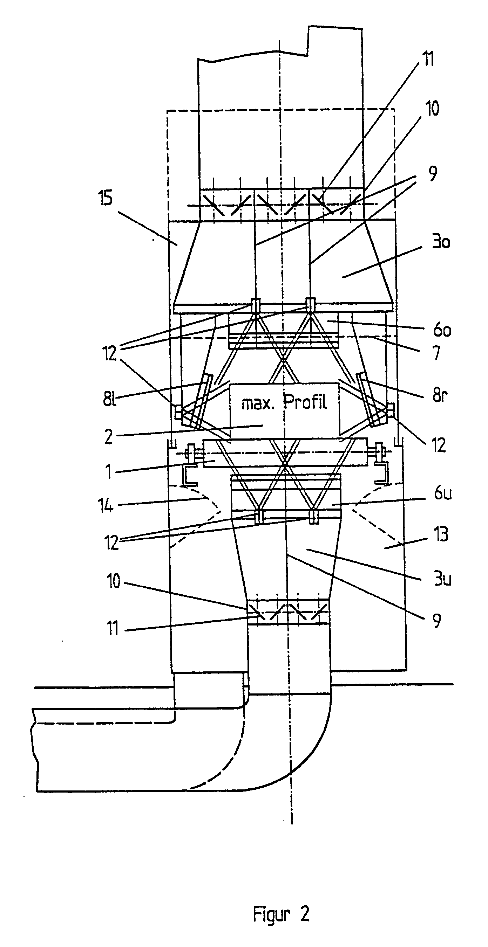

Die Erfindung wird im folgenden anhand eines typischen Ausführungsbeispieles beschrieben und durch die Figuren 1 und 2 näher erläutert.

Es zeigen
- Figur 1: eine Längsansicht und
- Figur 2: einen Querschnitt der erfindungsgemäßen Vorrichtung.

In den Figuren ist nur eine Sektion der Vorrichtung dargestellt. Wenn die mit der Vorrichtung zu bewältigende Kühlaufgabe dies erfordert, so wird eine entsprechende Anzahl derartiger Sektionen hintereinander angeordnet, wobei in der Regel nur die erste Sektion, wie in den Figuren dargestellt, sowohl als Luftkühlsektion als auch als Wasserkühlsektion betrieben werden kann.

Auf einer Transporteinrichtung, vorteilhaft einem Rollengang (1), wird das Strangpreßprofil (2) das in den Figuren 1 und 2 durch die Einhüllende des maximal vorgesehenen Strangpreßprofilquerschnittes dargestellt ist, durch die Vorrichtung geführt. Statt des Rollenganges können auch leiterartig angeordnete Gleitsteine aus einem geeigneten Material, z. B. Graphit, verwendet werden. Oberhalb und unterhalb des Rollenganges ist je ein oberer Düsenkasten (3o) und ein unterer Düsenkasten (3u) angeordnet. Der untere Düsenkasten kann mit in den Figuren nicht dargestellten Einstellhilfen entsprechend dem Rollengang eingestellt werden, der in üblicher Weise an die Auslaufhöhe des Profils angepaßt werden kann. Diese Verstellmöglichkeit ist in Figur 1 mit den Doppelpfeilen (4) angedeutet. Der obere Düsenkasten verfügt über eine in der Figur 1 ebenfalls nur durch Doppelpfeile (5) angedeutete Schnellhubeinrichtung, z. B. vorteilhaft eine Schnellanhebung mit Hilfe entsprechend synchronisierter Hydraulikzylinder. Diese sind ebenfalls in der Figur nicht dargestellt, da solche Schnellhubeinrichtungen aus anderen technischen Anwendungen hinreichend bekannt sind.

Die Düsenkästen für Luftkühlung (3o) und (3u) tragen horizontale Schlitzdüsenrippen (6o) und (6u). Dabei sind die oberen Düsenrippen (6o) etwa im Bereich der Rollen oder Stege der Transporteinrichtung und die unteren Düsenrippen (6u) dazwischen angeordnet. Zusätzlich zu den Schlitzdüsenrippen (6o) ist der obere Düsenkasten (3o) noch mit den auf beiden Seiten des Profils (2) angeordneten, nach unten gerichteten Düsenarmen (7) ausgestattet. Durch diese ebenfalls mit Schlitzdüsen (8) versehenen Düsenarme wird Kühlluft auf die vertikalen Seitenflächen des Profils geblasen. Die oberen Schlitzdüsen (6o), die seitlichen Schlitzdüsen (8r) und (8l) sowie die unteren Schlitzdüsen (6u) sind derart einander gegenüber angeordnet, daß ihre Mittelebenen möglichst gleichen Abstand zur jeweils benachbarten Schlitzdüse haben und sich die Schlitzstrahlen folglich im Kühlbereich, in welchem sich das Profil (2) befindet, nicht durchdringen. Auf diese Weise wird nämlich erreicht, daß alle Schlitzstrahlen das abzukühlende Strangpreßprofil gleichmäßig beaufschlagen und umspülen. Unter Einhaltung dieser Randbedingung kann jede konstruktions- oder fertigungstechnische Anordnung der Luftdüsen zueinander gewählt werden.

Zur Anpassung der Luftkühlwirkung an das jeweilige Strangpreßprofil ist die Luftführung auf der Zuströmseite zu den Düsen in Abschnitte parallel zur Preßrichtung unterteilt. Diese Abschnitte werden durch die Trennbleche (9) gebildet. Diese Trennbleche setzen sich bis in den Anschlußstutzen (10) fort und unterteilen diesen in Felder, in welche jeweils eine Drosseleinrichtung eingebaut ist. Eine vorteilhafte Ausführungsform einer solchen Drosseleinrichtung sind z. B. gegenläufig verstellbare Klappen (11). Mit Hilfe dieser Drosseleinrichtungen kann nunmehr die Ausblasgeschwindigkeit der Luftschlitzdüsen in einem weiten Bereich der durch Massen- bzw. Wandstärkenverteilung des Strangpreßprofils vorgegebenen Situation angepaßt werden.

Für die Wasserkühlung sind Wasserrohre (12) vorgesehen, die in Preßrichtung verlaufen. In Figur 2, einem Querschnitt der Vorrichtung nach der Erfindung, sind jeweils zwei Wasserrohre oberhalb und unterhalb und je ein Wasserrohr auf jeder Seite des Strangpreßprofils vorgesehen. Bei Abkühlvorrichtungen für breitere und/oder höhere Strangpreßprofile wird die Anzahl der über- bzw. unterhalb des Profils sowie der seitlich angeordneten Rohre entsprechend angepaßt. Zweckmäßiger Weise sind diese Rohre als Doppelrohre ausgeführt. Diese Doppelrohre können, wie in Figur 2 dargestellt, durch die Anordnung von zwei Rechteckrohren nebeneinander gebildet werden. Diese Rohre sind mit Düsen - zweckmäßiger Weise Flachstrahldüsen - ausgerüstet. Die Düsen sind so angeordnet, daß deren Spritzbilder, wie im Querschnitt der Vorrichtung Figur 2 dargestellt, sich derart überdecken, daß eine gleichmäßige Wasserbeaufschlagung über dem Umfang des Strangpreßprofils stattfindet.. Durch Abschalten eines der beiden Dopppelrohre kann die Wasserbeaufschlagung verringert werden. Eine weitere Möglichkeit, die Wasserbeaufschlagungsdichte insgesamt zu verringern, ist durch die Möglichkeit der Veränderung des Pumpendruckes durch Drosselung oder Drehzahländerung der Pumpe gegeben. Die Düsen sind in den Wasserspritzrohren entsprechend der Teilung der Luftdüsen angeordnet. Diese Teilung ist von der minimalen Preßgeschwindigkeit abhängig. Sie wird derart gewählt, daß über der Teilungslänge, also zwischen der Beaufschlagung von zwei Düsen, keine Rückerwärmung im Strangpreßprofil durch Wärmeleitung aus dem Materialkern stattfinden kann, die aus metallurgischen Gründen nicht zulässig ist.

Da die Kühlwirkung mit Wasser erheblich höher ist als mit Luft, ist es zweckmäßig, in einer Sektion einer Luftkühlung mindestens zwei Sektionen einer Wasserkühlung vorzusehen. Dies ist auf einfache Weise dadurch möglich, daß die längsverlaufenden, mit Düsen bestockten Wasserrohre an den entsprechenden Stellen der Vorrichtung getrennt werden und jeweils eine separate Zuführung möglichst von einer separaten Pumpe erhalten. Auf diese Weise kann die Wasserbeaufschlagung auch über der Länge der Profile in der Kühleinrichtung verändert werden. Es ist so z. B. möglich, im ersten Bereich der Abkühlung, wo das Profil besonders empfindlich ist, da es sich bei den entsprechenden Temperaturen noch plastisch verformt, schwächer zu kühlen und eine stärkere Kühlung erst dann vorzunehmen, wenn, bedingt durch den Fortschritt der Abkühlung, der Elastizitätsmodul des Materials sich wieder dem Elastizitätsmodul bei Umgebungstemperatur angenähert hat und eine Verformung durch ungleichmäßige Kühlung elastisch erfolgt, also nach Temperaturausgleich im Profil wieder verschwindet.

Um den Betrieb sowohl mit Wasser als auch mit Luft zu ermöglichen, ist der untere Luftkasten in einen Wasserauffangbehälter (13) integriert. Dieser Wasserauffangbehälter kann zweckmäßiger Weise mit Klappen (14) ausgerüstet sein, die bei Luftkühlung eine zu intensive Beblasung der Wasseroberfläche ausschließen und zugleich ein im wesentlichen ungehindertes Abströmen der Kühlluft gestatten. Zur Vermeidung von Spritzwasser im oberen Bereich der Profilkühlung ist das obere Düsensystem mit einem Schutzkasten (15) versehen, der bei Betrieb als Wasserkühlung abgesenkt und bei Betrieb als Luftkühlung angehoben wird. Es ist also mit der Vorrichtung nach der Erfindung möglich, ohne nennenswerte Umstellungen, die zudem noch automatisch erfolgen können, sowohl mit Luft als auch mit Wasser zu arbeiten und den gesamten Kühlbereich von mäßiger Luftkühlung über intensive Luftkühlung bis zu hochintensiver Wasserkühlung zu überdecken.

## Patentansprüche

1. Vorrichtung zur Abkühlung von Strangpreßprofilen mit
- oberhalb und unterhalb des auf einer Auslaufbahn (1) bewegten Strangpreßprofils (2) angeordneten, quer zur Profilbewegungsrichtung verlaufenden Luftdüsen (6u, 6o), und mit
- von den Luftdüsen (6u, 6o) getrennten Wasserbeaufschlagungsdüsen zur Beaufschlagung des Strangpreßprofils (2) mit Wasser,
dadurch gekennzeichnet, daß
- die Wasserbeaufschlagungsdüsen (12) in Profilbewegungsrichtung verlaufenden Rohren (12) derart angeordnet sind, daß sich die Beaufschlagungsfelder der einzelnen Wasserbeaufschlagungsdüsen (12) zu einer gleichmäßigen Beaufschlagung des Profils (2) ergänzen, daß
- die Luftdüsen (6u, 6o) Luftschlitzdüsen sind, die für eine Abkühlung der Profile über im wesentlichen die gesamte Länge der Vorrichtung sorgen, und daß
- die Vorrichtung so ausgestaltet ist, daß die Abkühlung entweder nur mittels der Luftschlitzdüsen oder nur mittels der Wasserbeaufschlagungsdüsen (12) erfolgt.

2. Vorrichtung nach Anspruch 1, dadurch gekennzeichnet, daß die Rohre oberhalb, unterhalb und seitlich des Strangpreßprofils angeordnet sind.

3. Vorrichtung nach einem der Ansprüche 1 oder 2, dadurch gekennzeichnet, daß Einrichtungen zur Anpasssung der Luftbeaufschlagung und/oder der Wasserbeaufschlagung an die jeweils benötigte Abkühlgeschwindigkeit des Profils (2) vorgesehen sind, die bevorzugt automatisch gesteuert werden.

4. Vorrichtung nach einem der Ansprüche 1 bis 3, dadurch gekennzeichnet, daß obere Luftschlitzdüsen (8l, 8r) auch seitlich zu beiden Seiten des Strangpreßprofils angeordnet sind.

5. Vorrichtung nach einem oder mehreren der Ansprüche 1 bis 4, dadurch gekennzeichnet, daß die Zuführung zu den Luftschlitzdüsen (6u, 6o) in Sektionen, welche in Längsrichtung der Vorrichtung verlaufen, unterteilt ist und diese Unterteilungen (9) sich bis in einen Luftzufuhrstutzen (10) fortsetzen, welcher in dem durch die Unterteilungen aufgeteilten Bereich mit Drosseleinrichtungen (11) zur Verstellung der Stärke des Luftstromes in die jeweils abgeteilten Sektionen versehen ist.

6. Vorrichtung nach Anspruch 5, dadurch gekennzeichnet, daß ein oberer Düsenkasten (3o) mit den oberen Luftschlitzdüsen (6o) in mindestens drei Sektionen und ein unterer Düsenkasten (3u) mit den unteren Luftschlitzdüsen (6u) in mindestens zwei Sektionen unterteilt ist, wobei insbesondere die Sektionsunterteilung des oberen Düsenkastens (3o) eine getrennte Einstellung der Beblasungsstärke der seitlich angeordneten Schlitzdüsen (8l, 8r) gestattet.

7. Vorrichtung nach einem der Ansprüche 1 bis 6, dadurch gekennzeichnet, daß die Waserrohre (12) als Doppelrohre ausgeführt sind.

8. Vorrichtung nach einem der Ansprüche 1 bis 7, dadurch gekennzeichnet, daß die in Längsrichtung der Vorrichtung verlaufenden mit Spritzdüsen bestückten Wasserrohre (12) einzeln zu- und abgeschaltet werden können.

9. Vorrichtung nach einem der Ansprüche 1 bis 8, dadurch gekennzeichnet, daß mehrere Sektionen einer derartigen Vorrichtung hintereinander angeordnet sind, wobei eine oder mehrere Sektionen sowohl mit Luftschlitzdüsen als auch mit Wasserbeaufschlagungsdüsen und eine oder mehrere Sektionen ausschließlich mit Luftschlitzdüsen ausgerüstet sind.

10. Vorrichtung nach einem der Ansprüche 1 bis 9, dadurch gekennzeichnet, daß eine Luftkühlsektion der Vorrichtung in mindestens zwei Wasserkühlsektionen unterteilt ist, wobei die einzelnen Wasserkühlsektionen über eine Wasserzuführung mit getrennt verstellbarem Versorgungsdruck verfügen und jeweils getrennt schaltbare in Längsrichtung der Vorrichtung verlaufende, mit Spritzdüsen versehene Wasserrohre (12) aufweisen.

11. Vorrichtung nach einem der Ansprüche 1 bis 8, dadurch gekennzeichnet, daß als Wasserbeaufschlagungsdüsen Flachstrahldüsen verwendet werden.

12. Vorrichtung nach einem der Ansprüche 1 bis 9, dadurch gekennzeichnet, daß ihr unterer Abschnitt in einen Wasserauffangbehälter (13) integriert ist, welcher mit bei Luftkühlbetrieb zu öffnenden Abströmklappen (14) versehen ist und, daß ihr oberer Abschnitt von einer dem Spritzschutz dienenden Verkleidung (15) umgeben ist, welche bei Luftkühlbetrieb zur Vermeidung einer Behinderung der abströmenden Kühlluft angehoben werden kann.

## Claims

1. A device for cooling extruded profiles comprising
- slotted air nozzles (6u, 6o) arranged above and below the extruded profile (2) moving on an exit runway (1) and oriented transversely to the direction of movement of the profile, and
- water application nozzles for impinging the extruded profile (2) with water, separate from said air nozzles (6u, 6o),
characterized in that
- said water application nozzles (12) are arranged in tubes (12) extending in the direction of movement of said profiles such that said impingement portions of said individual water application nozzles (12) supplement each other for a homogenous impingement of said extruded profile (2), that
- said air nozzles (6u, 6o) are air slot nozzles ensuring cooling of said profiles over substantially the full length of the device and that
- the device is configured so that cooling occurs either only by means of said air slot nozzles or only by means of said water application nozzles (12).

2. The device as set forth in claim 1, characterized in that the tubes are arranged above, below and an the side of the extruded profile.

3. The device as set forth in one of claims 1 or 2, characterized in that means are provided for adapting air application and/or water application to the cooling rate of the profile (2) required in each case, the means being preferably automatically controlled.

4. The device as set forth in any of the claims 1 to 3, characterized in that the upper air slot nozzles (8l, 8r) are also arranged laterally an both sides of the extruded profile.

5. The device according to one or several of the claims 1 to 4, characterized in that the supply to the air slot nozzles (6u, 6o) is divided in sections extending in the longitudinal direction of the device and these zones (9) continue up to an air supply port (10) provided in the region divided by said zones with flow reducing means (11) for adjusting the strength of the air flow into each of the zoned sections.

6. The device as set forth in claim 5, characterized in that an upper blowing header (30) including the upper air slot nozzles (6o) is sectioned into at least three sections and a lower blowing header (3u) including the lower air slot nozzles (6u) is sectioned into at least two sections, particularly the sectioning of the upper blowing header (30) permitting separate adjustment of the blowing strength of the side located slot nozzles (8l, 8r).

7. The device as set forth in any of the claims 1 to 6, characterized in that the water tubes (12) are devised as double tubes.

8. The device as set forth in any of the claims 1 to 7, characterized in that the water tubes (12) extending in the longitudinal direction of the device and fitted with spray nozzles may be individually switched ON/OFF.

9. The device as set forth in any of the claims 1 to 8, characterized in that several sections of such a device are arranged successively, one or more section(s) being equipped with both air slot nozzles and water application nozzles and one or more section(s) being exclusively equipped with air slot nozzles.

10. The device as set forth in any of the claims 1 to 9, characterized in that an air cooling section of the device is sectioned into at least two water cooling sections, the individual water cooling sections being provided with a water feed at a separately adjustable supply pressure and each comprising water tubes (12), which are separately switchable, oriented in the longitudinal direction of the device and provided with spray nozzles.

11. The device as set forth in any of the claims 1 to 8, characterized in that flat spray nozzles are employed as water application nozzles.

12. The device as set forth in any of the claims 1 to 9, characterized in that its lower portion is integrated into a water catchment tank (13) provided with exit flow valves (14) to be opened during an air cooling Operation, further characterized in that its upper portion is surrounded by a shroud (15) for splash protection which may be raised during an air cooling Operation to prevent obstruction of the exit flow of cooling air.

## Revendications

1. Dispositif de refroidissement de profilés extrudés, comprenant
- des buses d'air (6u, 6o) disposées au-dessus et en dessous du profilé extrudé (2) déplacé sur une piste de sortie (1) et qui s'étendent transversalement par rapport à la direction du déplacement du profilé (2), et
- des gicleurs de projection d'eau séparés des buses d'air (6u, 6o), pour projeter de l'eau sur le profilé extrudé (2),
caractérisé en ce que
- les gicleurs (12) de projection d'eau sont disposés dans des tubes (12) qui s'étendent dans la direction du déplacement du profilé de telle sorte que les champs de projection des gicleurs individuels (12) de projection d'eau se complètent pour former une attaque régulière du profilé (2),
- en ce que les buses (6 u, 6 o) sont des buses d'air en fente qui assurent un refroidissement des profilés sur essentiellement la totalité de la longueur du dispositif, et
- en ce que le dispositif est configuré de telle sorte que le refroidissement s'effectue uniquement au moyen des buses d'air en fente ou uniquement au moyen des gicleurs de projection d'eau (12).

2. Dispositif selon la revendication 1, caractérisé en ce que les tubes sont disposés au-dessus, en dessous et sur les côtés du profilé extrudé.

3. Dispositif selon l'une des revendications 1 ou 2, caractérisé en ce que des dispositifs d'adaptation de la projection d'air et/ou de la projection d'eau à la vitesse de refroidissement chaque fois nécessaire du profilé (2) sont prévus, et sont de préférence commandés automatiquement.

4. Dispositif selon l'une des revendications 1 à 3, caractérisé en ce que des buses supérieures d'air en fente (8l, 8r) sont également disposées latéralement sur les deux côtés du profilé extrudé.

5. Dispositif selon l'une ou plusieurs des revendications 1 à 4, caractérisé en ce que l'amenée aux buses d'air en fente (6u, 6o) est divisée en sections qui s'étendent dans le sens longitudinal du dispositif, et ces divisions (9) se prolongent jusque dans un raccord (10) d'amenée d'air qui, dans la zone du dispositif qui est divisée par les séparations, est doté d'étranglements (11) pour le réglage de l'intensité de l'écoulement d'air dans chacune des sections distinctes.

6. Dispositif selon la revendication 5, caractérisé en ce qu'un caisson supérieur (3o) de buses comportant les buses supérieures d'air en fente (6o) est divisé en au moins trois sections, et un caisson inférieur (3u) de buses comportant les buses inférieures d'air en fente (6u) est divisé en au moins deux sections, et en particulier la division en sections du caisson supérieur (3o) de buses permet un réglage séparé de l'intensité de soufflage des buses en fente (8l, 8r) disposées latéralement.

7. Dispositif selon l'une des revendications 1 à 6, caractérisé en ce que les tubes à eau (12) sont configurés comme tubes doubles.

8. Dispositif selon l'une des revendications 1 à 7, caractérisé en ce que les tubes à eau (12) qui s'étendent dans la direction longitudinale du dispositif et qui sont équipés de gicleurs de projection peuvent être branchés et débranchés individuellement.

9. Dispositif selon l'une des revendications 1 à 8, caractérisé en ce que plusieurs sections d'un tel dispositif sont disposés les unes derrière les autres, et une ou plusieurs sections sont équipées aussi bien de buses d'air en fente que de gicleurs de projection d'eau, et une ou plusieurs sections sont équipées exclusivement de buses d'air en fente.

10. Dispositif selon l'une des revendications 1 à 9, caractérisé en ce qu'une section de refroidissement par air du dispositif est divisée en au moins deux sections de refroidissement par eau, et les sections individuelles de refroidissement par eau disposent d'une amenée d'eau dont la pression d'alimentation est réglable séparément et présentent chacune des tubes d'eau (12) qui sont dotés de gicleurs de projection, s'étendent dans la direction longitudinale du dispositif et sont aptes à être branchés séparément.

11. Dispositif selon l'une des revendications 1 à 8, caractérisé en ce que comme gicleurs de projection d'eau l'on utilise des gicleurs à jet plat.

12. Dispositif selon l'une des revendications 1 à 9, caractérisé en ce que sa partie inférieure est intégrée dans un récipient (13) de reprise d'eau qui est doté de clapets d'évacuation (14) qui doivent s'ouvrir lors du fonctionnement en refroidissement par air, en ce que sa partie supérieure est entourée par un habillage (15) qui sert de protection contre les projections, et qui peut être relevé lors du fonctionnement en refroidissement par air, pour éviter de faire obstacle à l'air de refroidissement qui s'écoule vers le bas.
